# EUROPÄISCHE PATENTSCHRIFT

(11) **EP 4 291 790 B1**
(45) Veröffentlichungstag und Bekanntmachung des Hinweises auf die Patenterteilung: **12.03.2025**
(21) Anmeldenummer: 22729183.8
(22) Anmeldetag: 16.05.2022
(51) Int. Cl.: F16B 31/00, F16D 7/04, F16D 9/04

(54) **ANTRIEBS- UND/ODER VERSTELLVORRICHTUNG MIT ÜBERLASTSCHUTZ**
DRIVE AND/OR ADJUSTMENT DEVICE HAVING OVERLOAD PROTECTION
DISPOSITIF D'ENTRAÎNEMENT ET/OU DE RÉGLAGE À PROTECTION CONTRE LES SURCHARGES

(30) Priorität: 20.05.2021 DE 102021113127
(43) Veröffentlichungstag der Anmeldung: 20.12.2023
(73) Patentinhaber: Liebherr-Components Biberach GmbH, 88400 Biberach an der Riß (DE)
(72) Erfinder: HOLLAND, Maximilan, 88400 Biberach (DE)
(74) Vertreter: Thoma, Michael
(86) Internationale Anmeldenummer: PCT/EP2022/063129
(87) Internationale Veröffentlichungsnummer: WO 2022/243217

(56) Entgegenhaltungen:
- EP-A1- 3 483 477
- EP-A2- 1 561 970
- WO-A1-2008/019931

## Beschreibung

Die vorliegende Erfindung betrifft eine Antriebs- und/oder Verstellvorrichtung zum Antreiben und/oder Verstellen einer verdrehbaren Baugruppe, insbesondere eines verzahnten Großwälzlagerrings einer Windkraftanlage, einer Seilwinde oder eines Drehwerks einer Baumaschine, mit einem Abtriebselement zum rotatorischen Antreiben der verdrehbaren Baugruppe, einem Getriebe, das dem Abtriebselement vorgeschaltet ist und zumindest ein Drehmoment übertragendes Zahnrad aufweist, und einem Überlastschutz für die verdrehbare Baugruppe.

Eine solche Antriebs- und/oder Verstellvorrichtung zeigt die Schrift EP 3 483 477 A1, bei der zwischen zwei koaxial aneinander sitzenden Zahnrädern eine Sicherheitskupplung als Überlastschutz vorgesehen ist, wobei die Zahnräder über stirnseitige Rastvorsprünge an sich drehgesichert zueinander sind und über eine Feder gegeneinander vorgespannt sind, sodass sie bei Überlast entgegen der Federkraft axial auseinanderdriften und durchrutschen können. Weitere Antriebs- und/oder Verstellvorrichtungen mit einem Überlastschutz zeigen die Schriften EP 1 561 970 A3 und WO 2008/019931 A1.

Bei großen Drehantrieben oder -stellwerken, die großen äußeren Lasten unterworfen sind, wie dies beispielsweise bei Gondel- oder Blattverstellantrieben von Windkraftanlagen oder dem Drehwerk eines Krans wie beispielsweise eines Derricckrans oder auch bei antriebsstarken Seilwinden der Fall ist, werden üblicherweise an den zu verdrehenden Baugruppen Zahnkränze angebracht, die von einem damit kämmenden Antriebsritzel rotatorisch angetrieben bzw. verstellt werden können, das das Abtriebselement eines Antriebsstrangs bildet. Als Antrieb kann ein Elektro- oder Hydromotor Verwendung finden, der über ein Getriebe das genannte Abtriebselement und damit den genannten Zahnkranz antreibt. Der Zahnkranz kann dabei am Innen- oder Außenumfang eines Wälzlagerrings angebracht sein, der mit der zu verdrehenden Baugruppe wie beispielsweise der Gondel einer Windkraftanlage oder der Drehbühne eines Krans verbunden sein kann und Teil eines Wälzlagers bildet, mit dem die Baugruppe drehbar gelagert ist. Solche verzahnten Wälzlager bilden oft Großwälzlager mit Durchmessern von mehr als einem halben Meter oder auch mehreren Metern, um das hohe Gewicht und die hohen Lagerkräfte der zu verdrehenden Baugruppe abstützen zu können.

Um bei Überlastsituationen Beschädigungen der Zähne am Zahnkranz oder gar am Großwälzlagerring zu vermeiden, besitzt die Antriebs- und/oder Verstellvorrichtung oft einen Überlastschutz, der die Übertragung übermäßiger Drehmomente bzw. - kräfte auf das zu verdrehende Bauteil und insbesondere den Zahnkranz am Wälzlagerring verhindert. Ein solcher Überlastschutz sieht dabei oft eine Sollbruchstelle an einem Antriebsstrang-Bauteil vor, das keine größeren Schäden verursacht und vor allem einfacher auszutauschen ist als beispielsweise der verzahnte Lagerring eines Großwälzlagers. Letzterer kann kaum ausgetauscht werden, da hierzu die oft massive, schwere Baugruppe wie die Drehbühne mit dem gesamten Oberaufbau eines Krans oder die Gondel mit dem gesamten Rotor einer Windkraftanlage demontiert werden müsste.

Eine solche Sollbruchstelle kann beispielsweise in der Abtriebswelle vorgesehen sein, die das mit dem Zahnkranz kämmende Ritzel antreibt, wobei die Abtriebswelle an einer Stelle vom Durchmesser so stark geschwächt werden kann, dass sie zwar der Betriebslast standhält, aber bei einer vorbestimmten Überlast statisch bricht.

Einen solchen Überlastschutz in Form einer Sollbruchstelle durch Schwächung der Abtriebswelle eines Drehwerkantriebs zeigt beispielsweise die Schrift US 2011/0027006 A.

Um die Sollbruchlast bzw. das Sollbruchdrehmoment einzustellen, kann im Wesentlichen an der Abtriebswelle der Durchmesser verändert bzw. die Größe der Durchmesserschwächung verändert werden, oder das Material der Abtriebswelle entsprechend angepasst werden. Beides ist jedoch nur in begrenztem Maße veränderbar oder gar frei wählbar, da der zur Verfügung stehende Bauraum je nach Anwendung sehr begrenzt ist und es sich bei der Abtriebswelle und dem Abtriebswellengehäuse oft um kundespezifische Bauteile handelt, welche individuell an den jeweiligen Anwendungsfall angepasst sind, so dass für jeden Anwendungsfall gesondert eine spezifische Lösung gefunden werden muss. Zudem ist der Überlastschutz nur schwer nachrüstbar, da die Einbauumgebung vorgegeben und insofern die Variationsmöglichkeiten für Abänderungen der Abtriebswelle begrenzt sind.

Hinzu kommt, dass durch eine Sollbruchstelle in der Abtriebswelle in einem Drehantrieb an sich die Abtriebswelle und das Abtriebswellengehäuse geändert werden müssen, da das Getriebe durch die Durchmesserverjüngung bzw. die Sollbruchstelle gewöhnlich länger wird. Zudem muss üblicherweise eine Distanzscheibe eingesetzt werden. Insgesamt ist der Aufwand der zu ändernden Teile sehr groß, so dass die erforderliche Änderung der Rohteile und die hierfür erforderlichen Kosten bezogen auf eine Kleinserie sehr hoch sind.

Ein anderes Problem ergibt sich aus dem Lastfall. Mit einer Sollbruchstelle in Form einer Verjüngung versehene Abtriebswellen sind bei schwellender Belastung an sich in einem großen Lastbereich hinsichtlich Ermüdungslast und statischer Last einsetzbar. Bei wechselnder Belastung allerdings ist der Bereich stark eingeschränkt, da bei hoher Ermüdung die Sollbruchstelle sehr dick wird. Dies führt dazu, dass die Sollbruchstelle nicht versagt, wenn die statische Last niedrig ist, da ansonsten die Ermüdung nicht ertragen werden kann.

Hiervon ausgehend liegt der vorliegenden Erfindung die Aufgabe zugrunde, eine verbesserte Antriebs- und/oder Stellvorrichtung der genannten Art zu schaffen, die Nachteile des Stands der Technik vermeidet und letzteren in vorteilhafter Weise weiterbildet. Insbesondere soll ein verbesserter Überlastschutz geschaffen werden, der die zu verdrehende Baugruppe bzw. schwierig zu tauschende Strukturteile sowohl bei schwellender als auch bei wechselnder Belastung verlässlich schützt und in einfacher Weise an verschiedene Anwendungs- und Lastfälle anpassbar ist.

Erfindungsgemäß wird die genannte Aufgabe durch eine Antriebs- und/oder Stellvorrichtung gemäß Anspruch 1 gelöst. Bevorzugte Ausgestaltungen der Erfindung sind Gegenstand der abhängigen Ansprüche.

Es wird also vorgeschlagen, den Überlastschutz an einem Zahnrad des Getriebes vorzusehen, das dem Abtriebselement des Antriebsstrangs vorgeschaltet ist und über das genannte Abtriebselement die zu verdrehende Baugruppe antreibt bzw. verstellt. Dabei wird das Zahnrad so ausgebildet, dass es im Überlastfall den Antriebsstrang unterbricht und kein Antriebsdrehmoment mehr überträgt. Erfindungsgemäß ist das Zahnrad geteilt ausgebildet und weist zwei Teile auf, die miteinander über eine Stirnverzahnung drehmomentübertragend verbunden und axial durch eine Axialsicherung in Stirnverzahnungseingriff gehalten sind, die bei einer vorbestimmten Axiallast zwischen den Zahnradteilen nachgibt. Gibt die Axialsicherung bei einer übergroßen Axiallast nach, können die Zahnradteile axial voneinander ausweichen, so dass sich der Stirnverzahnungseingriff zwischen den Zahnradteilen löst und die Zahnradteile gegeneinander verdrehbar sind. Durch die schrägen Zahnflanken erzeugt die Stirnverzahnung zwischen den Zahnradteilen Axialkräfte, die vom übertragenen Drehmoment abhängen, so dass ein Überlastfall mit einer übergroßen Axialkraft einhergeht, die dann zum Auslösen der Axialsicherung führen kann.

Durch die Integration des Überlastschutzes in ein Zahnrad des Getriebes reicht es, nur ein Bauteil des Antriebsstrangs zu tauschen, und es ist eine einfache Nachrüstung des Überlastschutzes für bestehende Drehantriebe einfach möglich. Zudem ist eine Anpassung des Überlastschutzes hinsichtlich des Auslösedrehmoments bzw. der Auslöselast an verschiedene Anwendungen und Antriebsfälle einfach möglich. Vor allen Dingen kann für schwellende und wechselnde Belastung gleichermaßen eine definierte Auslösung des Überlastschutzes ohne größere Unterschiede zwischen den Belastungsfällen erzielt werden, da die Axialsicherung großteils nur schwellend auf Zug belastet wird. Der Stirnverzahnungseingriff zwischen den beiden Zahnradteilen erzeugt auch bei wechselnden Drehrichtungen bzw. wechselnden Belastungen nur schwellende Zugbelastungen der Axialsicherung, so dass sich im Vergleich zu herkömmlichen Sollbruchstellen in der Abtriebswelle Vorteile insbesondere im Fall wechselnder Belastungen ergeben.

Besonders vorteilhaft ist es, wenn der Überlastschutz in das Sonnenrad eines Planetengetriebes integriert ist, über das das Abtriebselement der Antriebs- und/oder Verstellvorrichtung und damit die zu verdrehende Baugruppe angetrieben bzw. verstellt wird. Insbesondere kann das Sonnenrad des Planetengetriebes in der genannten Weise geteilt ausgebildet sein und zwei Sonnenradteile aufweisen, die über eine Stirnverzahnung drehmomentübertragend verbunden und axial durch die Axialsicherung im Stirnverzahnungseingriff und damit drehfest aneinander gehalten sind, bis die genannte Axialsicherung nachgibt und die Sonnenradteile axial ausweichen und außer Stirnverzahnungseingriff geraten können.

Das Sonnenrad einer Abtriebsstufe kann üblicherweise für verschiedene Drehantriebe einer Baugröße gleich sein, so dass zwei Rohteile pro Baureihengröße ausreichend sind. Gleichzeitig kann im Vergleich zu einer herkömmlichen, ungeteilten Sonne die Länge des Sonnenrads beibehalten werden, so dass weitergehende Anpassungen der Einbauumgebung wie beispielsweise einer Umbildung des Getriebegehäuses vermieden werden können. Dennoch bestehen vielerlei Einstell- bzw. Anpassoptionen, um das Auslösen des Überlastschutzes zu steuern, beispielsweise durch Verändern der Verzahnungsgeometrie hinsichtlich Eingriffswinkel und/oder Zahnlänge und/oder Zahnrichtung und/oder Zähnezahl, oder durch die Ausbildung der Axialsicherung.

Die genannte Axialsicherung ist in einfacher Weise starr ausgebildet und hält die beiden Zahnradteile bis zum Auslösen bei Überlast an sich unbeweglich und starr aneinander. Da das Drehmoment an sich nur über den Stirnverzahnungseingriff übertragen wird, erfährt die Axialsicherung lediglich eine Zugbelastung, so dass die Axialsicherung keine Biegemomente ertragen muss und keine Bewegungen zulassen muss.

Dabei bildet die Axialsicherung eine Sollbruchstelle zwischen den beiden Zahnradteilen. Bricht die Axialsicherung bei einer vorbestimmten Überlast, können sich die beiden Zahnradteile axial, d.h. entlang der Drehachse des Zahnrads zueinander bewegen und voneinander ausweichen, um den Stirnverzahnungseingriff zu lösen, was dann bei einer Relativverdrehung der Zahnradteile zueinander ermöglicht und den Antriebsstrang unterbricht.

Grundsätzlich wäre es möglich, die Axialsicherung elastisch bzw. nachgiebig auszubilden, so dass sie bei Erreichen einer vorbestimmten Axiallast zwischen den Zahnradteilen nachgibt, sich beispielsweise längt, um den Stirnverzahnungseingriff zu lösen und die Zahnradteile zueinander verdrehen zu lassen. Dies würde jedoch zu einem Durchrutschen der Zahnradverteilung mit einem entsprechenden Aufeinanderrattern der Zähne einhergehen, was zu entsprechenden Beschädigungen an der Stirnverzahnung der Zahnradteile führen würde. Insofern kann es kostengünstiger sein, die Axialsicherung als Sollbruchstelle auszubilden und nach einem Brechen auszutauschen, da dann die unbeschädigten Zahnradteile wiederverwendbar sind.

In vorteilhafter Weiterbildung der Erfindung kann die Axialsicherung einen oder mehrere Zugbolzen beispielweise in Form von einer oder mehreren Schrauben aufweisen, die die beiden Zahnradteile aneinander in Stirnverzahnungseingriff halten und als Sollbruchstelle dienen, wenn im Überlastfall die Stirnverzahnung eine übergroße Axiallast auf die Zugbolzen bzw. Schrauben bewirkt.

Vorteilhafterweise kann jedes der beiden Teile des Zahnrads eine Umfangsverzahnung aufweisen, durch die die Zahnradteile mit vor- und nachgeordneten Getriebeelementen des Antriebsstrangs drehmomentübertragend in Wälz- bzw. Kammeingriff stehen. Die Zahnradteile weise in diesem Fall einerseits umfangsseitig eine Verzahnung und andererseits stirnseitig eine Verzahnung auf, über die die Antriebs- bzw. Verstellmomente bzw. -kräfte des Antriebsstrangs übertragen werden. Löst die genannte Axialsicherung aus und gerät die Stirnverzahnung zwischen den Zahnradteilen außer Eingriff, kann jedes Zahnradteil bzw. jede Zahnradhälfte über ihre Umfangsverzahnung weiterhin mit dem vor- bzw. nachgeordneten Getriebeelement des Antriebsstrangs in Kammeingriff verbleiben und eingebunden bleiben. Dennoch wird keine Antriebs- bzw. Stellbewegung mehr übertragen.

Um die axiale Ausweichbewegung zuzulassen, kann zumindest eines der Zahnradteile - wenn man die Axialsicherung außer Acht lässt bzw. den ausgelösten Fall annimmt - axialbeweglich gelagert sein. Dabei kann es ausreichend sein, wenn die Lagerung zumindest eines Zahnradteiles ausreichendes axiales Spiel aufweist, das ausreichend groß ist, um die Stirnverzahnung außer Eingriff geraten zu lassen. Die Zahnradteile werden axial nur von der Axialsicherung aneinandergehalten und die Lagerung der Zahnradteile ist derart beschaffen, dass bei Bruch bzw. Auslösen der Axialsicherung sich die Zahnradteile soweit axial auseinander bewegen können, dass die Stirnverzahnung außer Eingriff gerät.

Die genannte Stirnverzahnung kann dabei grundsätzlich verschieden ausgebildet sein. In vorteilhafter Weiterbildung der Erfindung kann eine Hirth-Verzahnung an den Zahnradhälften bzw. -teilen vorgesehen sein. Es können aber auch anderen Stirnverzahnungstypen vorgesehen sein, wobei die Stirnverzahnung der Zahnradteile vorzugsweise keine axiale Hemmung besitzen, die die Zahnradteile bei einem Bruch der Axialsicherung aneinanderhalten würde. Insbesondere können die Zähne der Stirnradverzahnung hinsichtlich Eingriffswinkel und/oder Zahnlänge und/oder Zahnrichtung und/oder Zahnflankenkontur und/oder Zähnezahl derart konfiguriert sein, dass bei einem vorbestimmten Drehmoment zwischen den Zahnradteilen eine ausreichend große Axialkraft zwischen den Zahnradteilen generiert wird, die die Zahnradteile auseinandertreibt und damit den Stirnverzahnungseingriff lösen kann, wenn die Axialsicherung gebrochen ist bzw. ausgelöst hat.

Um eine Beschädigung der Zahnradteile oder weiterer Getriebeelemente durch Bruchstücke der Axialsicherung zu vermeiden, kann in vorteilhafter Weiterbildung der Erfindung eine Fangsicherung für gebrochene Axialsicherungsstücke vorgesehen sein. Insbesondere kann eine solche Fangsicherung abgebrochene Stücke der Zugbolzen bzw. der Schrauben in den bzw. an dem Zahnradteil halten bzw. fangen, an dem das Bolzen- bzw. Schraubenstück in ungebrochenem Zustand montiert war. Beispielsweise können die Bolzen bzw. Schrauben an beiden Zahnradteilen gesichert sein, so dass auch in gebrochenem Zustand die Bolzenstücke bzw. Schraubstücke in ihrer bestimmungsgemäßen Montagestellung gehalten bleiben. Beispielsweise können die Bolzen bzw. Schrauben mit ihren Köpfen bzw. Muttern versenkt oder zumindest bündig montiert sein und durch einen Deckel, eine Haltespange oder ähnliches an dem Zahnradteil für den Fall des Bruchs gesichert sein.

Nach einem Auslösen der Überlastsicherung durch Bruch der Axialsicherung bzw. des zumindest einen Zug- und/oder Schraubbolzens kann die gebrochene Axialsicherung entfernt und durch eine neue, unversehrte Axialsicherung ersetzt werden, sodass die geteilten Zahnräder wieder verwendet werden können. Es brauchen lediglich die beiden Zahnradteile wieder in Stirnverzahnungseingriff gebracht werden und, je nach Ausbildung der Axialsicherung, ein neuer oder mehrere neue Schraub- und/oder Zugbolzen eingesetzt werden, die die beiden Zahnradteile wieder aufeinanderhalten.

Ist der Überlastschutz in der schon genannten Weise in das Sonnenrad einer Planetengetriebestufe integriert, kann das Sonnenrad mit einem Sonnenradteil über eine Laufverzahnung mit dem Planetenträger der vor- oder nachgeordneten Getriebestufe verbunden sein. Alternativ oder zusätzlich hierzu kann die andere Sonnenradhälfte die eigentliche Sonne bilden bzw. eine Laufverzahnung aufweisen, mit der die genannte Sonnenradhälfte mit den Planeten der Planetenstufe kämmt.

Die Erfindung wird nachfolgend anhand eines bevorzugten Ausführungsbeispiels und zugehörigen Zeichnungen näher erläutert. In den Zeichnungen zeigen:
- Fig. 1:: eine perspektivische Ansicht einer Windkraftanlage, deren Gondel über ein Großwälzlager mit einem Zahnkranz rotatorisch antreibbar gelagert ist,
- Fig. 2:: eine perspektivische Ansicht der Antriebs- und/oder Verstellvorrichtung zum rotatorischen Antreiben bzw. Verstellen des den Zahnkranz aufweisenden Großwälzlagers, mit dem die Gondel der Windkraftanlage aus Fig. 1 abgestützt sein kann,
- Fig. 3:: eine Schnittansicht des Sonnenrads einer Planetengetriebestufe der Antriebs- und/oder Verstellvorrichtung aus den vorhergehenden Figuren, die die geteilte Ausbildung des Sonnenrads als Überlastschutz zeigt, und
- Fig. 4:: eine Schnittansicht eines Sonnenrads ähnlich Fig. 3, wobei die beiden Teile des Sonnenrads nicht mit mehreren Schraub- und/oder Zugbolzen, sondern mit einem zentralen Schraubbolzen im Stirnverzahnungseingriff gehalten sind.

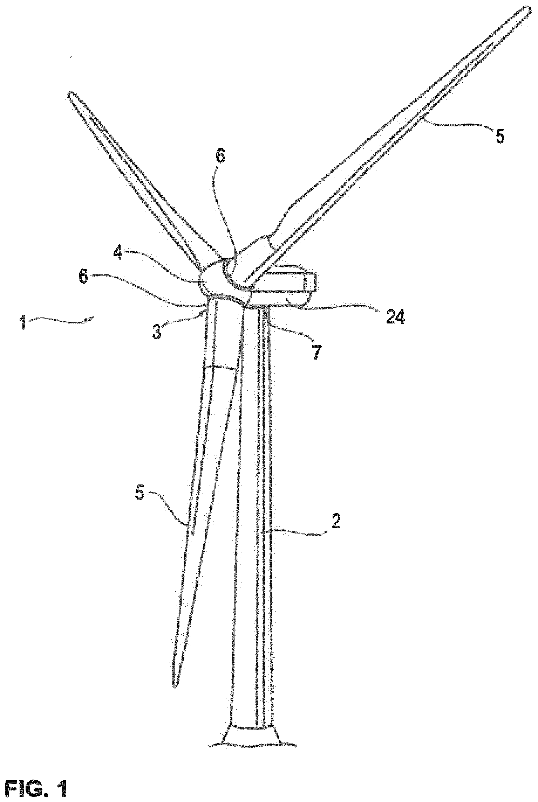

Wie Figur 1 zeigt, kann die Antriebs- und/oder Verstellvorrichtung in einer Windkraftanlage 1 eingesetzt werden, um deren Gondel 24 um eine aufrechte Achse verdrehen bzw. deren Azimutwinkel einstellen zu können. An der Gondel 24 bzw. einem Maschinenhaus kann der Rotor 3 um eine liegende Rotorachse drehbar gelagert sein, wobei die genannte Gondel 24 selbst auf einem Turm 2 um eine aufrechte Achse mittels eines Großwälzlagers drehbar gelagert sein kann.

An der Rotornabe 4 können Rotorblätter 5 um Rotorblattlängsachsen drehbar gelagert sein, die mittels einer Antriebs- und/oder Verstellvorrichtung in ihrem Pitchwinkel einstellbar sein können. In ähnlicher Weise kann die genannte Gondel 24 durch eine Antriebs- und/oder Verstellvorrichtung verdreht werden.

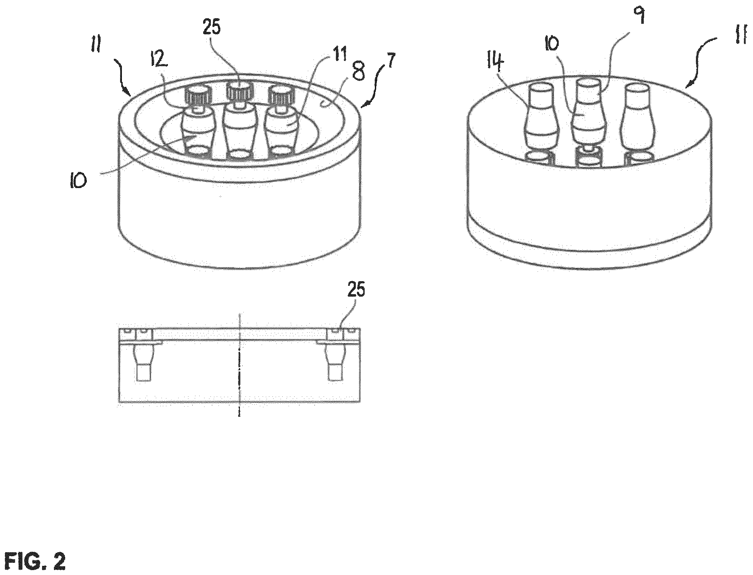

Wie Figur 2 zeigt, kann das genannte Azimutlager 7 - und in ähnlicher Weise auch das Pitchlager 6 - in Form eines Großwälzlagers ausgebildet sein, das zwei zueinander drehbare Lagerringe aufweist, von denen einer am Innenumfang oder am Außenumfang mit einer Verzahnung in Form eines Zahnkranzes 8 versehen sein kann. Um das zu verdrehende Bauteil in Form des Zahnkranzes 8 bzw. des damit verbundenen Lagerrings rotatorisch verstellen zu können, ist eine Antriebs- und/oder Verstellvorrichtung 11 vorgesehen, die als Abtriebselement 25 ein Ritzel umfassen kann, das mit dem Zahnkranz 8 kämmt, um letzteren rotatorisch anzutreiben.

Wie Figur 2 zeigt, können auch mehrere Antriebs- und/oder Verstellvorrichtungen 11 vorgesehen sein, um gemeinsam das zu verdrehende Bauteil anzutreiben bzw. zu verstellen.

Die genannte Antriebs- und/oder Verstellvorrichtung 11 kann einen Antriebsmotor 9 beispielsweise in Form eines Elektromotors oder eines Hydraulikmotors aufweisen, dessen rotatorische Antriebsbewegung über ein Getriebe 10 eine Abtriebswelle 12 antreibt, auf der das Abtriebselement 25 in Form des Ritzels sitzt.

Das genannte Getriebe 10 kann insbesondere als ein- oder mehrstufiges Planetengetriebe ausgebildet sein, bei dem ein Sonnenrad 13 mit Planetenrädern kämmt, die drehbar auf einem Planetenträger um das Sonnenrad 13 herum angeordnet sind. Je nach Bauweise des Planetengetriebes kann der Planetenträger feststehend oder drehbar gelagert sein.

In an sich bekannter Weise können die genannten Planetenräder mit einem Hohlrad kämmen, das um die Planeten herum angeordnet ist und am Getriebegehäuse 14 feststehend angeordnet oder je nach Bauweise des Planetengetriebes auch drehbar gelagert sein kann.

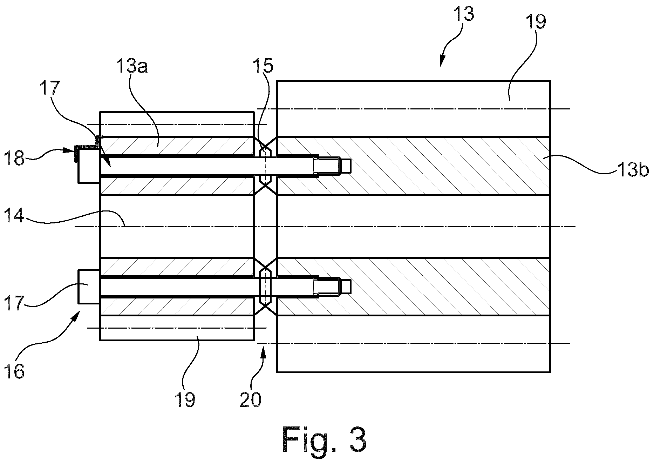

Wie Figur 3 zeigt, ist an dem Sonnenrad 13 eine Überlastsicherung 20 vorgesehen, um im Überlastfall eine Beschädigung des Zahnkranzes 8 des zu verdrehenden Bauteils oder gar eine Beschädigung am zu verdrehenden Bauteil selbst, beispielsweise am Lagerring des Azimutlagers 7 zu vermeiden. Die genannte Überlastsicherung 20 unterbricht den Kraft- bzw. Drehmomentfluss am Sonnenrad 13 und trennt den Antriebsstrang, sodass am Sonnenrad 13 kein Drehmoment und keine Antriebsbewegung vom Antriebsmotor 9 zum Abtriebselement 25 und umgekehrt auch keine Reaktionskräfte bzw. -drehmomente vom Abtriebselement 25 zum Antriebsmotor 9 übertragen werden.

Wie Figur 3 zeigt, ist das Sonnenrad 13 geteilt ausgebildet und umfasst zwei Zahnradteile bzw. -hälften 13a und 13b, die im normalen Betriebsfall durch die Überlastsicherung 20 drehfest miteinander verbunden sind. Die beiden Zahnradteile 13a und 13b können durch eine Trennebene senkrecht zur Drehachse 14 des Sonnenrads 13 voneinander getrennt sein bzw. miteinander in Kontakt stehen und verbunden sein. Insbesondere können die beiden Zahnradteile 13a und 13b miteinander gegenüberliegenden Stirnseiten einander berühren und miteinander verbunden sein. Um im normalen Betriebsfall Drehmomente übertragen zu können, sind die beiden Zahnradteile 13a und 13b mittels einer Stirnverzahnung 15 miteinander in Eingriff und drehfest verbunden. Die Stirnverzahnung 15 kann miteinander in Eingriff bringbare Verzahnungsringe bzw. -segmente oder -reihen aufweisen, die an den Stirnseiten der Sonnenradteile 13a und 13b vorgesehen sind.

Die genannte Stirnverzahnung 15 ist dabei vorteilhafterweise nicht selbsthemmend ausgebildet bzw. derart konfiguriert, dass keine axiale Hemmung auftritt, um die Zahnradteile 13a und 13b in axialer Richtung voneinander trennen zu können und den Stirnverzahnungseingriff lösen zu können, wenn die Überlastsicherung 20 auslöst und die beiden Zahnradteile 13a und 13b axial zueinander freigegeben werden.

Um eine solche axiale Hemmung zu vermeiden, können beispielsweise die Winkel der Zahnflächen der Stirnverzahnung 15 ausreichend groß gewählt werden. Alternativ oder zusätzlich kann die axiale Hemmung aber auch durch andere Verzahnungsparameter vermieden werden, beispielsweise den Eingriffswinkel, die Zahnlänge, die Zahnrichtung oder die Anzahl der Zähne der Stirnverzahnungssegmente.

Beispielsweise kann die genannte Stirnverzahnung 15 als sogenannte Hirt-Stirnverzahnung ausgebildet sein.

Um im Normalbetrieb die Stirnverzahnung 15 in Eingriff zu halten und die Zahnradteile 13a und 13b drehfest miteinander zu verbinden, umfasst die Überlastsicherung 20 eine Axialsicherung 16, die die beiden Zahnradteile 13a und 13b axial aufeinander im Stirnverzahnungseingriff hält und als Sollbruchstelle ausgebildet sein kann, um bei Überschreiten eines vorbestimmten Drehmoments zwischen den beiden Zahnradteilen 13a und 13b und damit Überschreiten einer vorbestimmten Axialkraft, die über die Zahngeometrie erzeugt wird, auszulösen.

Vorteilhafterweise kann die genannte Axialsicherung 16 einen oder mehreren Zugbolzen 17 beispielsweise in Form von Schraubbolzen umfassen, die beispielsweise um die Drehachse 14 herum verteilt angeordnet sein können und die beiden Zahnradteile 13a und 13b axial aufeinanderhalten, vgl. Figur 3.

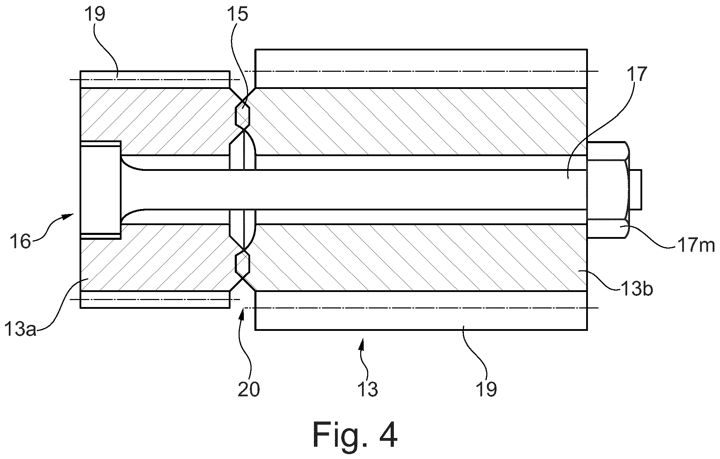

Wie Figur 4 zeigt, können die beiden Zahnradteile 13a und 13b aber auch von nur einem Zugbolzen 17 beispielsweise in Form eines Schraubbolzens axial aufeinandergehalten werden, wobei bei Verwendung nur eines Zugbolzens 17 letzterer vorteilhafterweise zentral bzw. koaxial zur Drehachse angeordnet sein kann, vgl. Figur 4. Ein solcher zentraler Zugbolzen 17 tritt vorteilhafterweise nicht durch die Stirnverzahnung 15 hindurch, sondern wird von der genannten Stirnverzahnung 15 umgeben, welche radial vom Zugbolzen 17 beabstandet sein kann, vgl. Figur 4.

Das Drehmoment zwischen den Zahnradteilen 13a und 13b wird dabei vorteilhafterweise alleine durch die Stirnverzahnung 15 übertragen, während die Axialsicherung 16, insbesondere deren Zug- bzw. Schraubbolzen 17 alleine oder zumindest vorrangig auf axialem Zug parallel zur Drehachse 14 belastet werden. Die genannten Axialkräfte auf die Zug- bzw. Schraubbolzen 17 entstehen durch die schrägen Zahnflanken, die mit einer Keilwirkung die Zahnradteile 13a und 13b auseinander zu treiben versuchen.

Die genannten Zug- oder Schraubbolzen 17 werden vorteilhafterweise derart auf die Stirnverzahnung 15 abgestimmt, dass ein Sollbruch und damit ein Auslösen der Überlastsicherung 20 bei einem vorbestimmten Drehmoment an den Zahnradteilen 13a und 13b auftritt. Genauer gesagt werden die Schraub- bzw. Zugbolzen 17 so konfiguriert, dass sie bei einer vorbestimmten Axiallast brechen. Im Zusammenspiel mit der Auslegung der Stirnverzahnungsgeometrie kann hierdurch ein Auslösen der Überlastsicherung 20 bei einem vorbestimmten Drehmoment erreicht werden.

Durch den Bruch der Zug- bzw. Schraubbolzen 17 kann die von der Stirnverzahnung 15 ausgehende axiale Belastung nicht mehr übertragen werden und die Stirnverzahnung 15 bzw. die Zahnradteile 13a und 13b werden axial auseinander getrieben, wodurch der Antriebsstrang im Getriebe 10 an dem Sonnenrad 13 unterbrochen wird. Hierdurch wird die Abtriebsstufe bzw. die Antriebs- und/oder Verstellvorrichtung lastfrei geschaltet.

Hierdurch versagt das Getriebe 10, genauer gesagt das Sonnenrad 13 bei Überlast, bevor beispielsweise der Zahnkranz 8 am Großwälzlager bricht.

Um weitergehende Beschädigungen durch Bruchstücke der Zug- bzw. Schraubbolzen 17 an anderen Getriebeelementen zu vermeiden, können die genannten Zug- bzw. Schraubbolzen 17 vorteilhafterweise so montiert sein, dass sie auch nach einem Brechen an den Zahnradteilen 13a und 13b verbleiben. Eine Fangsicherung 18 kann die gebrochenen Axialsicherungsteile an den Zahnradteilen 13a und 13b festhalten, insbesondere in deren bestimmungsgemäßer Montagestellung, die auch im ungebrochenen Zustand eingenommen wird.

Wie Figur 3 zeigt, können die Schraubbolzen 17 beispielsweise sich durch eines der Zahnradteile 13a bzw. darin ausgebildete Durchgangsausnehmungen hindurch erstrecken und in Schraubgewinde eingeschraubt sein, die im anderen Zahnradteil 13b vorgesehen sind, beispielsweise in Form eines Sacklochgewindes. Der in das Sacklochgewinde eingeschraubte, ggf. abgebrochene Bolzenteil verbleibt durch das Einschrauben im Zahnradteil 13b. Um auch den anderen abgebrochenen Bolzenteil im Zahnradteil 13a zu halten, kann die Fangsicherung 18 den Bolzenkopf an der Stirnseite des Zahnradteils 13a festhalten. Beispielsweise kann ein Deckel oder eine Abdeckung über die Bolzen 17 bzw. deren Köpfe gesetzt sein, die an der Stirnseite des Zahnradteils 13a liegen.

Wie Figur 4 zeigt, kann die Axialsicherung 16, unabhängig davon, ob nur ein oder mehrere Zugbolzen 17 vorgesehen sind, sich auch durch eine durch beide Zahnradteile 13a, 13b hindurchgehende Durchgangsausnehmung hindurcherstrecken und mittels einer Mutter 17m gesichert sein, die sich an einem der Zahnradteile 13b axial abstützen kann. Die genannte Mutter 17m kann dabei axial überstehend montiert sein, wie dies Figur 4 zeigt, ggf. aber auch versenkt in dem jeweiligen Zahnradteil 13b montiert sein, ähnlich wie dies in Figur 4 für den Kopf des Zugbolzens 17 gezeigt ist. Auch bei Verwendung einer aufgeschraubten Mutter 17m kann die genannte Fangsicherung 18 vorgesehen sein, wobei in diesem Fall die Fangsicherung 18 zwei Fangsicherungsteile umfassen kann, von denen einer dem Zugbolzenkopf und ein anderer der genannten Mutter zugeordnet ist, um diese im Falle des Bruchs am jeweiligen Zahnradteil 13a bzw. 13b festzuhalten.

Als Zugbolzen 17 kann beispielsweise eine Dehnschaftschraube oder eine Carbonstange Verwendung finden.

Durch das Vorsehen der Überlastsicherung 20 am Sonnenrad 13 können insbesondere folgende Vorteile erzielt werden:
- Die Länge des Sonnenrads 13 bzw. dessen axiale Erstreckung in Richtung der Drehachse 14 kann an sich beibehalten werden. Um die Überlastsicherung 20 nachzurüsten, muss insofern nur ein Teil getauscht werden, sodass an sich bestehende Drehantriebe einfach nachrüstbar sind. Zudem ist das Sonnenrad 13 der Abtriebsstufe für verschiedene Drehantriebe einer Baureihengröße gleich, wodurch nur zwei neue Rohteile pro Baureihengröße angelegt werden müssen.
- Die Überlastsicherung 20 in Form der Sollbruchstelle der Axialsicherung 16 bzw. der Zugbolzen 17 wird auch bei wechselnden Drehrichtungen großteils auf Zug schwellend belastet, sodass Unterschiede in der Funktion zwischen schwellender und wechselnder Belastung geringer werden und die Überlastsicherung 20 gleichermaßen bei schwellender Belastung als auch bei wechselnder Belastung verlässlich auslöst. Insofern ergeben sich im Vergleich zu bisherigen Sollbruchstellen an der Abtriebswelle insbesondere Vorteil bezüglich einer Last im wechselnden Bereich.

- Es bestehen vielerlei Einstell- und Anpassoptionen, um das Auslösen der Überlastsicherung an den jeweiligen Anwendungs- bzw. Lastfall anpassen zu können. Beispielsweise kann im Bereich der Stirnverzahnung 15 die Zahnform variiert werden, insbesondere der Eingriffswinkel, die Zahnlänge, die Zahnrichtung und die Zähnezahl. Auf Seiten der Axialsicherung 16 können zudem die Schrauben- bzw. Bolzenform, die Anzahl der Zug- bzw. Schraubbolzen 17, deren Material und Querschnittsmaße verändert werden, um das Auslösen der Überlastsicherung 20 einstellen zu können.
- Eine bestehende Antriebs- und/oder Verstellvorrichtung kann in einfacher Weise mit einer Überlastsicherung 20 nachgerüstet werden, wobei eine Umstellung des Getriebes 10 alleine durch den Ersatz des Zahnrads bzw. des Sonnenrads 13 ohne weitere Modifikationen der Einbauumgebung erfolgen kann.

Wie Figur 3 zeigt, können die beiden Zahnradteile 13a und 13b umfangsseitig jeweils mit einer Laufverzahnung 19 versehen sein, um mit einem vorgeschalteten bzw. nachgeschalteten Getriebeelement in Kamm- bzw. Wälzeingriff zu stehen und eine entsprechende Antriebsbewegung übertragen zu können. Je nach Ausbildung des Getriebes 10 können dies unterschiedliche Getriebeelemente sein. Beispielsweise kann der Zahnradteil 13a mit seiner Laufverzahnung 19 mit einem Planetenträger einer vorherigen Planetengetriebestufe verbunden sein bzw. in Kammeingriff stehen. Die andere Zahnradhälfte 13b kann mit ihrer Laufverzahnung 19 mit den Planeten der Planetengetriebestufe kämmen und insofern die eigentliche Sonne des Planetengetriebes bzw. der Planetenstufe bilden.

Um nach dem Bruch der Axialsicherung 16 den Kraft- bzw. Momentenfluss zu trennen bzw. zu unterbrechen, kann zumindest eines der Zahnradteile 13a und 13b axial in Richtung der Drehachse 14 beweglich gelagert sein, beispielsweise durch ausreichendes Lagerspiel oder eine ausreichend dimensionierte Freigängigkeit in axialer Richtung.

Vorteilhafterweise kann das Getriebe, insbesondere die Lagerung des Zahnrads 13, derart ausgebildet sein, dass das zweigeteilte Zahnrad 13 mit der Überlastsicherung 20 durch ein dimensionsgleiches oder -ähnliches, einteiliges Zahnrad ohne Überlastsicherung ersetzt werden kann, sodass das Getriebe wahlweise mit dem zweiteiligen Zahnrad 13 mit Überlastsicherung oder eben mit einem herkömmlichen, nicht überlastgesicherten Zahnrad betreibbar ist bzw. in Betrieb gesetzt werden kann. Insbesondere kann hierdurch auch ein an sich herkömmliches Getriebe ohne Überlastsicherung in einfacher Weise mit einer Überlastsicherung nachgerüstet werden, indem ein bislang einteiliges Sonnenrad durch ein zweiteiliges Sonnenrad ersetzt wird, das in der beschriebenen Weise zwei Zahnradteile 13a, 13b umfasst, die in Stirnverzahnungseingriff gebracht werden und durch eine Axialsicherung in besagtem Stirnverzahnungseingriff gehalten werden können. Je nach Ausbildung des herkömmlichen, einteiligen Zahnrads kann es vorteilhaft sein, mehrere außermittig angeordnete Sicherungsbolzen zu verwenden, wie in Figur 3 gezeigt, oder die Version mit einem zentralen Sicherungsbolzen zu verwenden, wie dies Figur 4 zeigt. Insbesondere kann das Zahnrad 13 lösbar und austauschbar montiert sein, um wahlweise die eine oder andere Variante verwenden zu können.

## Patentansprüche

1. Antriebs- und/oder Verstellvorrichtung (11) zum Antreiben und/oder Verstellen einer verdrehbaren Baugruppe, beispielsweise eines Großwälzlagerrings einer Windkraftanlage oder eines Drehwerks einer Baumaschine oder eines Hebezeugs, mit einem Abtriebselement (25) zum rotatorischen Antreiben und/oder Verstellen der verdrehbaren Baugruppe, einem Getriebe (10), das dem Abtriebselement (25) vorgeschaltet ist und zumindest ein drehmomentübertragendes Zahnrad (13) aufweist, und einer Überlastsicherung (20) für die verdrehbare Baugruppe, wobei die Überlastsicherung (20) an dem Zahnrad (13) vorgesehen ist, das geteilt ausgebildet ist und zwei Zahnradteile (13a, 13b) aufweist, die miteinander über eine Stirnverzahnung (15) drehmomentübertragend verbunden und axial durch eine Axialsicherung (16), die bei einer vorbestimmten Axiallast zwischen den Zahnradteilen (13a, 13b) nachgibt, in Stirnverzahnungseingriff gehalten sind **dadurch gekennzeichnet, dass** die Axialsicherung (16) starr ausgebildet ist und eine Sollbruchstelle bildet.

2. Antriebs- und/oder Verstellvorrichtung nach dem vorhergehenden Anspruch, wobei das Getriebe (10) ein Planetengetriebe mit einem geteilten Sonnenrad (13) ist, das die Überlastsicherung (20) bildet.

3. Antriebs- und/oder Verstellvorrichtung nach dem vorhergehenden Anspruch, wobei das Sonnenrad (13) an den Sonnenradteilen (13a, 13b) einerseits mit Planetenrädern einer ersten Planetengetriebestufe kämmt und andererseits mit dem Planetenträger einer zweiten, vorgeschalteten oder nachgeschalteten Planetenstufe in Eingriff steht.

4. Antriebs- und/oder Verstellvorrichtung nach einem der vorhergehenden Ansprüche, wobei das geteilte Zahnrad an den Zahnradteilen (13a, 13b) jeweils umfangsseitig eine Laufverzahnung (19) aufweist, über die die Zahnradteile (13a, 13b) einerseits mit einem nachgeordneten Getriebeelement und andererseits mit einem vorgeordneten Getriebeelement in Wälzeingriff stehen, wobei die genannten Laufverzahnungen (19) vorzugsweise derart ausgebildet sind, dass die Zahnradteile (13a, 13b) gegenüber den vor- und nachgeordneten Getriebeelementen axial in Richtung der Drehachse (14) verschiebbar sind und/oder die Zahnradteile (13a, 13b) von den vor- und nachgeordneten Getriebeelementen keine Axialkräfte erfahren.

5. Antriebs- und/oder Verstellvorrichtung nach einem der vorhergehenden Ansprüche, wobei die Stirnverzahnung (15) zwischen den Zahnradteilen (13a, 13b) in der Eingriffsstellung auch bei Drehmomentübertragung axial hemmungsfrei, insbesondere als Hirthverzahnung, ausgebildet ist.

6. Antriebs- und/oder Verstellvorrichtung nach einem der vorhergehenden Ansprüche, wobei die Axialsicherung (16) einen oder mehrere Zug- und/oder Schraubbolzen (17) umfasst, der/die in beiden Zahnradteilen (13a, 13b) in axialen Ausnehmungen sitzen und die Zahnradteile (13a) stirnseitig aneinander hält/aneinander halten, insbesondere aufeinander spannt/aufeinander spannen.

7. Antriebs- und/oder Verstellvorrichtung nach dem vorhergehenden Anspruch, wobei die Zug- und/oder Schraubbolzen (17) sich durch die Stirnverzahnung (15) hindurch erstrecken und/oder parallel zur Drehachse (14) des Zahnrads (13) und beabstandet von der genannten Drehachse (14) angeordnet sind.

8. Antriebs- und/oder Verstellvorrichtung nach Anspruch 8, wobei die Axialsicherung (16) einen zentralen Zug- und/oder Schraubbolzen (17) umfasst, der sich koaxial zur Drehachse (14) des Zahnrads (13) erstreckt und von der Stirnverzahnung (15) umgeben ist, und die Axialsicherung (16) sich durch eines der Zahnradteile (13a) in axialer Richtung vollständig hindurcherstreckt und im anderen Zahnradteil (13b) in einer Sacklochbohrung verschraubt ist.

9. Antriebs- und/oder Verstellvorrichtung nach einem der Ansprüche 8 bis 11, wobei die Axialsicherung (16) sich durch eine durch beide Zahnradteile (13a, 13b) hindurchgehende Durchgangsbohrung in axialer Richtung hindurcherstreckt und mit einer Mutter (17m) verschraubt ist, die sich an einem der Zahnradteile (13b) axial abstützt.

10. Antriebs- und/oder Verstellvorrichtung nach einem der vorhergehenden Ansprüche, wobei eine Fangsicherung zum Festhalten der Axialsicherung (16) auch im gebrochenen Zustand an den Zahnradteilen (13a, 13b) in der bestimmungsgemäßen Montagestellung vorgesehen ist.

11. Antriebs- und/oder Verstellvorrichtung nach einem der vorhergehenden Ansprüche, wobei die Axialsicherung (16) auch im gebrochenen Zustand von den Zahnradteilen (13a, 13b) lösbar ausgebildet ist und durch eine neue, ungebrochene Axialsicherung (16) ersetzbar ist, mittels derer die Zahnradteile (13a, 13b) erneut wieder in ihren bestimmungsgemäßen Stirnverzahnungseingriff bringbar sind.

12. Antriebs- und/oder Verstellvorrichtung nach einem der vorhergehenden Ansprüche, wobei die Axialsicherung (16) und die Zahnradteile (13a, 13b) derart ausgebildet sind, dass die Zahnradteile (13a, 13b) auf die Axialsicherung (16) größtenteils, insbesondere ausschließlich Axialkräfte ausüben, während Drehmomente zwischen den Zahnradteilen (13a, 13b) im Wesentlichen, vorzugsweise ausschließlich durch die Stirnverzahnung (15) übertragen werden.

13. Antriebs- und/oder Verstellvorrichtung nach einem der vorhergehenden Ansprüche, wobei das Abtriebselement (25) als Ritzel ausgebildet ist, das drehfest auf einer Abtriebswelle des Getriebes (10) sitzt und mit einem an der zu verdrehenden Baugruppe befestigten Zahnkranz kämmt, wobei die Abtriebswelle sollbruchstellen- und kerbenfrei ausgebildet ist.

14. Antriebs- und/oder Verstellvorrichtung nach einem der vorhergehenden Ansprüche, wobei das Getriebe (10) eingangsseitig mit einem Antriebsmotor in Form eines Elektromotors oder Hydraulikmotors verbunden ist, dessen rotatorische Antriebsbewegung über das Getriebe (10) auf das vorzugsweise koaxial zur Motorwelle des Antriebsmotors (9) angeordnete Abtriebselement (25) gegeben wird.

15. Antriebs- und/oder Verstellvorrichtung nach einem der vorhergehenden Ansprüche, wobei das die Überlastsicherung (20) aufweisende Zahnrad (13) in dem Getriebe (10) austauschbar montiert ist und durch ein dimensionsgleiches oder -passendes Zahnrad (13) ohne Überlastsicherung ersetzbar ist, sodass das Getriebe (10) wahlweise mit dem überlastgesicherten Zahnrad (13) oder dem Zahnrad (13) ohne Überlastsicherung in Betrieb setzbar ist.

## Claims

1. Drive and/or adjustment device (11) for driving and/or adjusting a rotatable assembly, for example a large rolling bearing ring of a wind turbine or a slewing gear of a construction machine or of a hoist, comprising an output element (25) for rotationally driving and/or adjusting the rotatable assembly, a transmission (10) which is connected upstream of the output element (25) and comprises at least one torque-transmitting gear (13), and an overload safety mechanism (20) for the rotatable assembly, wherein the overload safety mechanism (20) is provided on the gear (13), which is divided and comprises two gear parts (13a, 13b) that are torque-transmittingly interconnected via a spur toothing (15) and are held axially in spur toothing engagement by an axial securing means (16) which yields at a predetermined axial load between the gear parts (13a, 13b), **characterized in that** the axial securing means (16) is rigidly configured and forms a predetermined breaking point.

2. Drive and/or adjustment device according to the preceding claim, wherein the transmission (10) is a planetary gear with a divided sun gear (13) forming the overload safety mechanism (20).

3. Drive and/or adjustment device according to the preceding claim, wherein the sun gear (13) on the sun gear parts (13a, 13b) meshes on the one hand with planet gears of a first planetary gear stage and, on the other hand, with the planet carrier of a second, upstream or downstream planetary stage.

4. Drive and/or adjustment device according to any one of the preceding claims, wherein the split gear wheel on the gear parts (13a, 13b) each comprises a meshing toothing (19) on the peripheral side, via which the gear parts (13a, 13b) are in a rolling engagement on the one hand with a downstream gear element and on the other hand with an upstream gear element, wherein said meshing toothing (19) is preferably configured such that the gear parts (13a, 13b) are axially displaceable in the direction of the axis of rotation (14) relative to the upstream and downstream gear elements and/or the gear parts (13a, 13b) are not subject to axial forces from the upstream and downstream gear elements.

5. Drive and/or adjustment device according to any one of the preceding claims, wherein the spur toothing (15) between the gear parts (13a, 13b) is configured to be axially impediment-free, in the engaged position, even during torque transmission, in particular as a Hirth joint.

6. Drive and/or adjustment device according to any one of the preceding claims, wherein the axial securing means (16) comprises one or more tension and/or screw bolts (17) which is/are seated in axial recesses in both gear parts (13a, 13b) and holds/hold the gear parts (13a) against one another on the end face, in particular clamps/clamp one against the other.

7. Drive and/or adjustment device according to the preceding claim, wherein the tension and/or screw bolts (17) extend through the spur toothing (15) and/or are arranged parallel to the axis of rotation (14) of the gear (13) and spaced from said axis of rotation (14).

8. Drive and/or adjustment device of claim 8, wherein the axial securing means (16) comprises a central tension and/or screw bolts (17) extending coaxially with the axis of rotation (14) of the gear (13) and surrounded by the spur toothing (15) and the axial securing means (16) extends completely through one of the gear parts (13a) in the axial direction and is screwed into a blind hole in the other gear part (13b).

9. Drive and/or adjustment device according to any one of claims 8 to 11, wherein the axial securing means (16) extends axially through a through bore passing through both gear parts (13a, 13b) and is screwed to a nut (17m) which is axially supported on one of the gear parts (13b).

10. Drive and/or adjustment device according to any one of the preceding claims, wherein a catching means is provided for retaining the axial securing means (16) even in the broken state on the gear parts (13a, 13b) in the intended assembly position.

11. Drive and/or adjustment device according to any one of the preceding claims, wherein the axial securing means (16) is configured to be detachable from the gear parts (13a, 13b) even in the broken state, and is replaceable by a new unbroken axial securing means (16), by means of which the gear parts (13a, 13b) can again be brought into their intended spur toothing engagement.

12. Drive and/or adjustment device according to any one of the preceding claims, wherein the axial securing means (16) and the gear parts (13a, 13b) are configured in such a way that the gear parts (13a, 13b) exert axial forces on the axial securing means (16) for the most part, in particular exclusively, while torques between the gear parts (13a, 13b) are transmitted essentially, preferably exclusively, by the spur toothing (15).

13. Drive and/or adjustment device according to any one of the preceding claims, wherein the output element (25) is configured as a pinion which is seated in a rotationally fixed manner on an output shaft of the transmission (10) and meshes with a gear rim attached to the assembly to be rotated, wherein the output shaft is configured to be free of rated breaking points and notches.

14. Drive and/or adjustment device according to any one of the preceding claims, wherein the transmission (10) is connected on the input side to a drive motor in the form of an electric motor or hydraulic motor, the rotational drive movement of which is transmitted via the transmission (10) to the output element (25), which is preferably arranged coaxially with the motor shaft of the drive motor (9).

15. Drive and/or adjustment device according to any one of the preceding claims, wherein the gear (13) having the overload safety mechanism (20) is replaceably mounted in the transmission (10) and can be replaced by a dimensionally identical or matching gear (13) without overload safety mechanism, so that the transmission (10) can be put into operation selectively with the overload-protected gear (13) or the gear (13) without overload safety mechanism.

## Revendications

1. Dispositif d'entraînement et/ou de réglage (11) pour l'entraînement et/ou le réglage d'un sous-ensemble rotatif, par exemple d'une bague de roulement de grande dimension d'une éolienne ou d'un mécanisme de rotation d'une machine de construction ou d'un engin de levage, avec un élément de sortie (25) pour l'entraînement en rotation et/ou le réglage du sous-ensemble rotatif, un engrenage (10) qui est monté en amont de l'élément de sortie (25) et qui présente au moins une roue dentée (13) transmettant le couple, et une protection contre les surcharges (20) pour le sous-ensemble rotatif, la protection contre les surcharges (20) étant prévue sur la roue dentée (13) qui est réalisée sous forme divisée et présente deux parties de roue dentée (13a, 13b) qui sont reliées l'une à l'autre par l'intermédiaire d'une denture frontale (15) en transmettant le couple et qui sont maintenues axialement en prise avec la denture frontale par une protection axiale (16) qui cède pour une charge axiale prédéterminée entre les parties de roue dentée (13a, 13b), **caractérisé en ce que** la protection axiale (16) est réalisée sous forme rigide et forme un point destiné à la rupture.

2. Dispositif d'entraînement et/ou de réglage selon la revendication précédente, dans lequel l'engrenage (10) est un engrenage planétaire avec une roue solaire divisée (13) qui forme la protection contre les surcharge (20).

3. Dispositif d'entraînement et/ou de réglage selon la revendication précédente, dans lequel la roue solaire (13) s'engrène au niveau des parties de roue solaire (13a, 13b) d'une part avec des satellites d'un premier étage d'engrenage planétaire et d'autre part est en prise avec le porte-satellites d'un deuxième étage planétaire situé en amont ou situé en aval.

4. Dispositif d'entraînement et/ou de réglage selon l'une quelconque des revendications précédentes, dans lequel la roue dentée divisée présente sur les parties de roue dentée (13a, 13b), à chaque fois sur le côté périphérique, une denture de roulement (19) par l'intermédiaire de laquelle les parties de roue dentée (13a, 13b) sont en prise de roulement d'une part avec un élément d'engrenage placé en aval et d'autre part avec un élément d'engrenage placé en amont, lesdites dentures de roulement (19) étant de préférence réalisées de telle sorte que les parties de roue dentée (13a, 13b) peuvent être déplacées axialement en direction de l'axe de rotation (14) par rapport aux éléments d'engrenage placés en amont et en aval et/ou que les parties de roue dentée (13a, 13b) ne subissent pas de forces axiales de la part des éléments d'engrenage placés en amont et en aval.

5. Dispositif d'entraînement et/ou de réglage selon l'une quelconque des revendications précédentes, dans lequel la denture frontale (15) entre les parties de roue dentée (13a, 13b) est réalisée, dans la position de prise, sans entrave axiale, notamment sous forme de denture Hirth, même en cas de transmission de couple.

6. Dispositif d'entraînement et/ou de réglage selon l'une quelconque des revendications précédentes, dans lequel la protection axiale (16) comprend un ou plusieurs boulons de traction et/ou de vissage (17) qui sont logés dans des évidements axiaux dans les deux parties de roue dentée (13a, 13b) et qui maintiennent les parties de roue dentée (13a) côté frontal l'une contre l'autre, notamment les serrent l'une sur l'autre.

7. Dispositif d'entraînement et/ou de réglage selon la revendication précédente, dans lequel les boulons de traction et/ou de vissage (17) s'étendent à travers la denture frontale (15) et/ou sont agencés parallèlement à l'axe de rotation (14) de la roue dentée (13) et à distance dudit axe de rotation (14).

8. Dispositif d'entraînement et/ou de réglage selon la revendication 8, dans lequel la protection axiale (16) comprend un boulon de traction et/ou de vissage central (17) qui s'étend coaxialement à l'axe de rotation (14) de la roue dentée (13) et qui est entouré par la denture frontale (15), et la protection axiale (16) s'étend complètement à travers l'une des parties de roue dentée (13a) dans la direction axiale et est vissée dans l'autre partie de roue dentée (13b) dans un trou borgne.

9. Dispositif d'entraînement et/ou de réglage selon l'une quelconque des revendications 8 à 11, dans lequel le protection axiale (16) s'étend dans la direction axiale à travers un trou de passage traversant les deux parties de roue dentée (13a, 13b) et est vissé à un écrou (17m) qui s'appuie axialement sur l'une des parties de roue dentée (13b).

10. Dispositif d'entraînement et/ou de réglage selon l'une quelconque des revendications précédentes, dans lequel il est prévu une protection d'arrêt pour maintenir la protection axiale (16), même à l'état cassé, sur les parties de roue dentée (13a, 13b) dans la position de montage conforme.

11. Dispositif d'entraînement et/ou de réglage selon l'une quelconque des revendications précédentes, dans lequel la protection axiale (16) est réalisée de manière à pouvoir être détachée des parties de roue dentée (13a, 13b), même à l'état cassé, et peut être remplacée par une nouvelle protection axiale (16) non cassée, au moyen de laquelle les parties de roue dentée (13a, 13b) peuvent à nouveau être amenées dans leur prise à denture frontale conforme.

12. Dispositif d'entraînement et/ou de réglage selon l'une quelconque des revendications précédentes, dans lequel la protection axiale (16) et les parties de roue dentée (13a, 13b) sont réalisées de telle sorte que les parties de roue dentée (13a, 13b) exercent sur la protection axiale (16) en grande partie, notamment exclusivement des forces axiales, tandis que les couples entre les parties de roue dentée (13a, 13b) sont transmis essentiellement, de préférence exclusivement, par la denture frontale (15).

13. Dispositif d'entraînement et/ou de réglage selon l'une quelconque des revendications précédentes, dans lequel l'élément de sortie (25) est réalisé sous forme de pignon qui est monté fixe en rotation sur un arbre de sortie de l'engrenage (10) et qui s'engrène avec une couronne dentée fixée sur le sous-ensemble à faire tourner, l'arbre de sortie étant réalisé sans points destinés à la rupture et sans entailles.

14. Dispositif d'entraînement et/ou de réglage selon l'une quelconque des revendications précédentes, dans lequel l'engrenage (10) est relié côté entrée à un moteur d'entraînement sous la forme d'un moteur électrique ou d'un moteur hydraulique, dont le mouvement d'entraînement rotatif est transmis par l'intermédiaire de l'engrenage (10) à l'élément de sortie (25) agencé de préférence coaxialement à l'arbre de moteur du moteur d'entraînement (9).

15. Dispositif d'entraînement et/ou de réglage selon l'une quelconque des revendications précédentes, dans lequel la roue dentée (13) présentant la protection contre les surcharges (20) est montée de manière interchangeable dans l'engrenage (10) et peut être remplacée par une roue dentée (13) de même dimension ou adaptée sans protection contre les surcharges, de telle sorte que l'engrenage (10) peut être mis en service au choix avec la roue dentée (13) protégée contre les surcharges ou avec la roue dentée (13) sans protection contre les surcharges.
